# FASCICULE DE BREVET EUROPEEN

(11) **EP 2 101 906 B1**
(45) Date de publication et mention de la délivrance du brevet: **07.07.2010**
(21) Numéro de dépôt: 07731491.2
(22) Date de dépôt: 09.01.2007
(51) Int. Cl.: B01J 8/06, C01B 3/38, B01J 19/00

(54) **PROCEDE DE REMPLACEMENT DES TUBES DE CATALYSEUR D'UN REFORMEUR D'HYDROCARBURES**
VERFAHREN ZUM ERSATZ DER KATALYSATORRÖHREN EINES KOHLENWASSERSTOFF-REFORMERS
METHOD OF REPLACING THE CATALYST TUBES OF A HYDROCARBON REFORMER

(43) Date de publication de la demande: 23.09.2009
(73) Titulaire: L'AIR LIQUIDE, Société Anonyme pour l'Etude et l'Exploitation des Procédés Georges Claude, 75007 Paris (FR)
(72) Inventeur: GALLARDA, Jean, F-94340 Joinville Le Pont (FR)
(74) Mandataire: Conan, Philippe Claude
(86) Numéro de dépôt international: PCT/FR2007/050635
(87) Numéro de publication internationale: WO 2008/087306

(56) Documents cités:
- WO-A-00/17946
- FR-A- 2 888 920
- US-A- 4 187 542
- US-A- 4 400 784
- US-A- 4 473 490
- RAHIMI ET AL: "CFD modeling of a boiler's tubes rupture" APPLIED THERMAL ENGINEERING, PERGAMON, OXFORD, GB, vol. 26, no. 17-18, décembre 2006 (2006-12), pages 2192-2200, XP005518803 ISSN: 1359-4311

## Description

La présente invention se rapporte à un procédé de maintenance d'un four pour le reformage catalytique d'un mélange réactionnel d'hydrocarbures, équipé de tubes remplis de catalyseur et dont une partie des tubes est munie de thermocouples, le procédé comprenant un suivi de la température des tubes.

Les hydrocarbures sont une des sources principales pour la fabrication de gaz de synthèse. La fabrication de gaz de synthèse consiste à transformer des hydrocarbures CₙHₘ en un mélange d'au moins de l'hydrogène (H₂), du monoxyde de carbone (CO), du dioxyde de carbone (CO₂). Les gaz produits sont ensuite utilisés pour mettre en oeuvre de nombreuses réactions chimiques. Ainsi, l'hydrogène pourra être utilisé notamment pour effectuer des réactions d'hydrogénation ou, après addition d'azote N₂, pour produire de l'ammoniac ; un mélange de CO, CO₂ et H₂ pourra conduire à la synthèse de méthanol, et des mélanges CO et H₂ sont à la base de synthèses oxo, etc.

L'un des procédés les plus utilisés pour réaliser cette transformation est le reformage catalytique à la vapeur d'hydrocarbures légers, notamment de gaz naturel. Dans un tel procédé, le mélange d'hydrocarbures légers, comprenant principalement du méthane, est mis à réagir avec de la vapeur d'eau en présence de catalyseur pour produire l'hydrogène et les oxydes de carbone. Parmi les différentes réactions mises en oeuvre lors du reformage, les réactions principales sont : la réaction endothermique de reformage, soit CH₄ + H₂O ↔ CO + 3H₂, ainsi que la réaction exothermique de conversion du CO, soit CO + H₂O ↔ CO₂ + H₂. Le reformage est globalement endothermique et est effectué à une température avoisinant généralement 1000°C. Il convient de noter que les hydrocarbures sont en général préalablement débarrassés des composés soufrés qu'ils contiennent, ceux-ci étant des poisons pour les catalyseurs couramment utilisés.

Un procédé de reformage catalytique à la vapeur d'hydrocarbures légers est mis en oeuvre dans une chambre de combustion comprenant des brûleurs et des tubes, les tubes étant remplis de catalyseur et étant aptes à être traversés par un mélange d'hydrocarbures et de vapeur, les brûleurs étant disposés de manière à transférer la chaleur de leur combustion au mélange d'hydrocarbures et de vapeur à travers la paroi des tubes.

En pratique, la réaction catalytique de reformage d'hydrocarbures par la vapeur d'eau s'effectue sous pression sur le catalyseur contenu dans les tubes chauffés extérieurement par radiation et convection. Les tubes de catalyseur sont disposés verticalement et la circulation du mélange réactionnel d'hydrocarbures et de vapeur s'effectue du haut vers le bas.

Un four de reformage comprend une zone de radiation, chambre de combustion dans laquelle sont disposés les tubes de catalyseur, et une zone de convection par laquelle s'effectue l'évacuation des fumées et des gaz de combustion produits dans la chambre de combustion. Les gaz de combustion évacués par la zone de convection sont utilisés pour le préchauffage du mélange réactionnel entrant d'hydrocarbures et de vapeur d'eau, et éventuellement d'autres fluides réactionnels. La zone de convection est généralement installée soit au-dessus de la chambre de combustion, soit verticalement à côté du four, soit horizontalement. Selon la position des brûleurs dans le four (en haut pour les «top fired», ou sur le côté pour les «side fired»), le profil de température vertical du tube est différent. Le maximum de température sera notamment atteint en un point du tube situé environ en son tiers supérieur dans le cas du «top fired» et autour du tiers inférieur dans le cas du «side fired».

Les tubes de catalyseur utilisés sont généralement du type tube centrifugé en acier allié. Le tube doit résister aux pressions et températures élevées mises en oeuvre dans un tel procédé, tout en assurant une bonne transmission de la chaleur au mélange réactionnel qui circule à l'intérieur. En plus de devoir posséder une résistance adaptée aux très hautes températures, ces tubes doivent être réalisés dans un matériau présentant également une très bonne résistance au fluage à de telles températures.

Les tubes de catalyseur sont soumis à des cycles de chauffage/refroidissement et à des températures très hautes ; leur vieillissement et leur intégrité doivent être surveillés d'une manière aussi précise et fiable que possible. En effet, ils sont calculés pour une durée de vie finie (typiquement 100 000 heures) à une température maximale d'utilisation DTT (Design Tube Temperature). Dépasser cette valeur limite maximale entraîne une diminution importante de la durée de vie des tubes. Par exemple, un fonctionnement constant à 20°C au dessus de la température d'utilisation pour laquelle les tubes ont été conçus divise par deux la durée de vie des tubes, la faisant passer d'une dizaine d'années à environ cinq ans. Ce problème revêt une importance toute particulière lors de phases de démarrage ou de changement de la composition du mélange réactionnel. La surveillance des températures auxquelles sont soumis les tubes est donc primordiale, mais la connaissance de l'historique de ces températures est aussi d'un intérêt crucial pour le procédé de reformage catalytique d'hydrocarbures.

Actuellement, des mesures de la température des tubes sont réalisées de manière discontinue, notamment par mesures pyrométriques. Des mesures peuvent également être effectuées en utilisant notamment des thermocouples. De telles mesures, qu'elles soient pyrométriques ou par thermocouples sont ponctuelles, à la fois dans l'espace et dans le temps ; elles ne permettent pas de connaître l'ensemble des écarts de températures auxquels chaque tube de catalyseur est soumis tout au long de sa vie et sur toute sa longueur.

Par ailleurs, les mesures pyrométriques s'effectuent par l'intermédiaire de trous de regard (peephole en langue anglaise), ménagées dans la paroi du four. Lors de la réalisation d'une mesure, l'opérateur ouvre le « peephole » et pointe le pyromètre (ou un autre instrument de mesure) à l'horizontale, vers le tube dont la température de paroi doit être mesurée ; cette manipulation tend cependant à diminuer la température à l'intérieur du four au niveau du « peephole ».

Dans le cas des mesures par thermocouple, il convient de noter que les thermocouples font partie intégrante des tubes de catalyseur, et de ce fait, les mesures de température ne requièrent pas d'intervention d'un opérateur à la différence de mesures pyrométriques. Les perturbations de température provoquées par l'ouverture d'un trou de regard par un opérateur sont évitées ainsi que les risques encourus par l'opérateur lors d'une telle mesure. Cependant, on ne peut pas toujours implanter le thermocouple à l'endroit du tube où la température est supposée être maximale car à cet endroit sa présence pourrait créer un point chaud.

Un des risques principaux découlant de l'absence de données fiables et précises sur la température réelle des tubes et les variations subies est le risque de vieillissement prématuré conduisant à la rupture intempestive d'un ou plusieurs tubes de catalyseur en cours de fonctionnement et à l'arrêt de l'installation - en dehors de plages de maintenance prédéfinies -.

En particulier, lors de phases transitoires telles qu'un redémarrage suite à un arrêt de maintenance ou un changement de la composition du mélange réactionnel, le risque qu'une surchauffe ne soit pas détectée et corrigée immédiatement existe ; la durée de vie des tubes de catalyseurs peut alors être réduite de manière significative. Par conséquent, dès lors que le risque de surchauffe ne peut pas être écarté, il est essentiel de contrôler le vieillissement des tubes afin d'en programmer le changement dès qu'il devient nécessaire.

Le suivi fiable des températures de chacun des tubes est d'autant plus important que les températures des tubes en fonctionnement ne sont pas les mêmes selon leur position dans le four, mais aussi en fonction de différents facteurs, tels que les séquences d'allumage, les types d'hydrocarbures et de combustibles utilisés, etc.

La présente invention a pour but de pallier les inconvénients précédemment évoqués grâce à un procédé de maintenance du four, s'appuyant sur la détermination de la température maximale de chaque tube durant toute la vie du four, de sorte à pouvoir programmer le changement des tubes en fonction de leur vieillissement.

Par température maximale, on entend la température au point le plus chaud du tube. En effet, considérant qu'un tube de reformage présente une longueur de plusieurs mètres et que de nombreux facteurs interviennent sur cette longueur qui induisent des modifications de température, il est essentiel de déterminer le lieu le plus chaud du tube, ainsi que la différence de température existant entre la température de paroi en ce point et la (les) température(s) effectivement déterminée(s) aux points où sont effectuées (ou estimées) les mesures lors du fonctionnement du four.

Pour cela, l'invention concerne donc un procédé de maintenance d'un four pour le reformage catalytique à la vapeur d'un mélange réactionnel d'hydrocarbures, le four comprenant des tubes remplis de catalyseur, une première partie des tubes T(j) étant équipés d'un thermocouple fixé en un point Yt(j) desdits tubes, les autres tubes T(i) en étant dépourvus, le procédé comprenant au moins les étapes suivantes :
1) mesurer périodiquement, pour chaque tube une température θp de paroi du tube à l'aide d'un moyen de mesure de température à distance ;
2) mesurer et enregistrer en continu pour chacun des tubes T(j) une deuxième température θt(j) de paroi du tube à l'aide du thermocouple fixé sur ledit tube et relié à un système d'acquisition de données apte à stocker des données pendant un temps au moins égal à la durée de vie du four, établir la courbe θt(j) en fonction du temps ;
3) pour chaque tube T(j), et pour chaque mesure θp, calculer Δθ(j) = θp(j) - θt(j) ;
4) pour chaque tube T(i), établir une courbe virtuelle θt(i)ᵥᵢᵣₜᵤₑₗ en fonction du temps telle que :
   - elle passe par des points θt(i)ᵥᵢᵣₜᵤₑₗ d'ordonnée θp(i) - Δθ(j) pour lesquels Δθ(j) est la valeur calculée lors de l'étape 3) pour un tube T(j) voisin choisi, et
   - elle correspond à la translation de la courbe θt(j) pour ledit tube T(j) voisin passant par ces points ;
5) par ailleurs, pour au moins un tube, déterminer le point du tube le plus chaud, et estimer l'écart de température Δθₘₐₓ entre la température θₘₐₓ audit point le plus chaud et la température θt mesurée au même moment dans les conditions de l'étape 2) ;
6) pour chaque tube T(i), établir une courbe θmax(i) en fonction du temps à partir de la courbe virtuelle θt(i)ᵥᵢᵣₜᵤₑₗ établie à l'étape 4 et du Δθₘₐₓ de l'étape 5), et pour chaque tube T(j) établir la courbe θmax(j) à partir de la courbe établie à l'étape 2 et du θΔmax estimé, de sorte à établir un historique de température de chaque tube T(i) ;
7) en déduire, en temps réel, et à l'aide d'une méthode de calcul appropriée une durée de vie restante pour chaque tube T(i), à partir de la courbe θmax(i) et pour chaque tube T(j), à partir de la courbe θmax(j) ;
8) comparer la durée de vie restante pour chacun des tubes avec le temps restant avant les prochains arrêts programmés du four; et ;
9) remplacer les tubes le nécessitant lors de chaque arrêt programmé.

Ainsi, le procédé de l'invention permet à l'utilisateur de suivre de la façon la plus exacte possible le vieillissement réel de chaque tube contenu dans le four de reformage et d'effectuer les remplacements des tubes le nécessitant lors des arrêts programmés du four (en ayant prévu l'approvisionnement du nombre requis de nouveaux tubes).

En effet, selon l'étape 1 du procédé ci-dessus, on mesure la température réelle θp pour chacun des tubes. Cette mesure est réalisée en un point du tube situé à une ordonnée Yₚ, pouvant être visée par un «peephole».

La mesure et l'enregistrement en continu de la température θt pour certains des tubes, selon l'étape 2 permet de disposer d'un historique précis des accidents de température dans le four sur une grande période de temps, s'étendant sur la durée de vie du four, mettant en évidence et enregistrant les éventuels dépassements de température. Pour cela, des tubes T(j) ont été équipés d'un thermocouple. Le thermocouple est de préférence fixé en un point du tube situé à une ordonnée Yₜ(j), choisie dans le 1/3 supérieur du tube par rapport au sens de circulation du mélange réactionnel dans le cas d'un four de reformage de type « top fired ». II est de préférence fixé en un point du tube situé à une ordonnée Yₜ(j), choisie dans le 1/3 inférieur du tube par rapport au sens de circulation du mélange réactionnel dans le cas d'un four de reformage de type « side fired ».

L'acquisition et l'enregistrement des mesures de température sont effectués par l'intermédiaire d'un système permettant la gestion d'un grand nombre de données, leur enregistrement en temps réel, ainsi que leur stockage et leur traitement pendant un temps au moins égal à la durée de vie du four. Le système d'acquisition de données est apte à enregistrer des mesures de températures en continu sur une durée supérieure à dix ans. La durée de vie théorique pour laquelle les tubes de catalyseur sont conçus étant d'environ dix ans, une telle capacité de mémoire permet d'avoir un historique complet des tubes de catalyseur.

On a ainsi réalisé pour la partie des tubes T(j) deux séries de mesures de température, l'une en continue, l'autre discrète ; on dispose donc périodiquement de deux mesures de température simultanées obtenues par deux moyens différents, permettant ainsi de calculer les écarts de température Δθ(j) pour l'ensemble des tubes T(j), et pour l'ensemble des mesures Δθ(j) (étape 3).

L'expérience montre que deux tubes voisins, dès lors qu 'ils sont identiques et qu'ils subissent sensiblement les mêmes perturbations en fonctionnement, présentent des écarts de température comparables ; de même, l'écart entre la température mesurée par pyromètre et par thermocouple pour un tube T(j) donné reste sensiblement constant entre deux mesures pyrométriques successives ; une variation anormale de cet écart mesuré pour un tube T(j) constituerait une anomalie et demanderait une vérification de la cohérence des mesures.

L'étape 4 permet, pour chaque tube T(i), d'établir une courbe virtuelle représentant les températures θt(i)ᵥᵢᵣₜᵤₑₗ en fonction du temps. Pour un tube T(i) quelconque, le choix du tube T(j) voisin n'est pas critique pour autant que la valeur indiquée θt(j) soit reconnue comme fiable. La cohérence des courbes ainsi établies peut être vérifiée lors de la réalisation des mesures θt(i).

Afin de déterminer de la façon la plus exacte possible le vieillissement d'un tube, il est nécessaire de prendre en compte pour le calcul de ce vieillissement non pas la température θt(i), mais la température maximale atteinte par le tube. A cet effet, le procédé comprend l'étape 5 durant laquelle on détermine, dans des conditions compatibles avec le fonctionnement du four, le point le plus chaud d'un tube représentatif de ceux dont on évalue le vieillissement en fonctionnement. On calcule l'écart entre la température mesurée en ce point et la température mesurée par thermocouple conformément à l'étape 2. On pourrait aussi déterminer l'écart par l'intermédiaire de la mesure pyrométrique. La détermination du point le plus chaud d'un tube est de préférence obtenue par l'établissement d'un profil de température du tube sur sa longueur ; ce profil peut être fourni par le fournisseur, en tant qu'élément du « basic du four » mais il pourra aussi faire l'objet d'une détermination lors d'essais de laboratoire ou sur le site industriel concerné, être obtenu par simulation ou selon toute autre méthode.

Lors de l'étape 6, on établit l'ensemble des courbes θₘₐₓ en fonction du temps pour les tubes T(i) et T(j) par :
- pour les tubes T(i) une translation des courbes θt(i)ᵥᵢᵣₜᵤₑₗ d'une valeur égale à l'écart correspondant à Δθₘₐₓ estimé à l'étape 5, et
- pour les tubes T(j), une translation des courbes θt(j) d'une valeur correspondant à l'écart Δθₘₐₓ estimé à l'étape 5.

A l'issue de ces étapes 1) à 6), on dispose ainsi de l'historique de la température maximale de chacun des tubes pour la durée de sa vie déjà écoulée.

Un tel historique des températures maximales pour chacun des tubes permet de calculer sa durée de vie estimée restante, à l'aide d'une méthode de calcul appropriée, selon l'étape 7 du procédé. Ce calcul est réalisé à intervalles de temps judicieusement choisis de sorte à recalculer aussi souvent que nécessaire cette durée de vie en fonction des évènements subis par les tubes tout au long de l'utilisation du four. Connaissant la durée de vie restante, on programme (étape 8), et on réalise (étape 9) le remplacement des tubes le nécessitant au cours d'un arrêt de maintenance.

Le procédé de l'invention ainsi décrit permet de réduire de manière très importante les risques de rupture des tubes en cours de fonctionnement, évite les arrêts intempestifs du four et les inconvénients qui y sont liés.

Avantageusement, le moyen de mesure de température à distance est un pyromètre.

De préférence, on mesure la température à l'aide du moyen de mesure de température à distance au moins une fois par mois pour l'ensemble des tubes.

Avantageusement, on mesure la température à l'aide du moyen de mesure de température à distance plus fréquemment pour les tubes les plus chauds, de préférence quotidiennement.

Cette mesure est aussi de préférence réalisée lors du démarrage de la réaction de reformage, en cas de modification de certains paramètres etc.

Les « peephole » sont disposés dans la paroi du four de telle sorte que chaque tube puisse être visé à partir d'au moins un « peephole » ; de façon classique, la disposition des « peephole » est telle qu'il est possible d'effectuer au moins deux mesures en des points différents sur la longueur d'un tube. Ainsi, préférentiellement, on effectuera au moins deux mesures de température à l'aide du moyen de mesure de température à distance en des points différents sur la longueur d'un tube et la mesure θp est la plus grande des valeurs mesurées.

Le four de reformage étant du type side fired, pour chaque tube T(j), le thermocouple est de préférence fixé en un point du tube situé à une ordonnée Yₜ(j), choisie dans le 1/3 inférieur du tube par rapport au sens de circulation du mélange réactionnel.

Le four de reformage étant du type top fired, pour chaque tube T(j), le thermocouple est de préférence fixé en un point du tube situé à une ordonnée Yₜ(j), choisie dans le 1/3 supérieur du tube par rapport au sens de circulation du mélange réactionnel.

L'acquisition et l'enregistrement des mesures de température pour la durée de vie du four de reformage sont avantageusement effectués par l'intermédiaire d'un système de type SCADA (« Supervisory Control And Data Acquisition »), dont la capacité de mémoire permet d'avoir un historique complet des tubes de catalyseur.

Avantageusement, la conversion de la relation θmax(i) = f(temps) en durée de vie restante pour chacun des tubes est réalisée en utilisant la relation de Larson Miller.

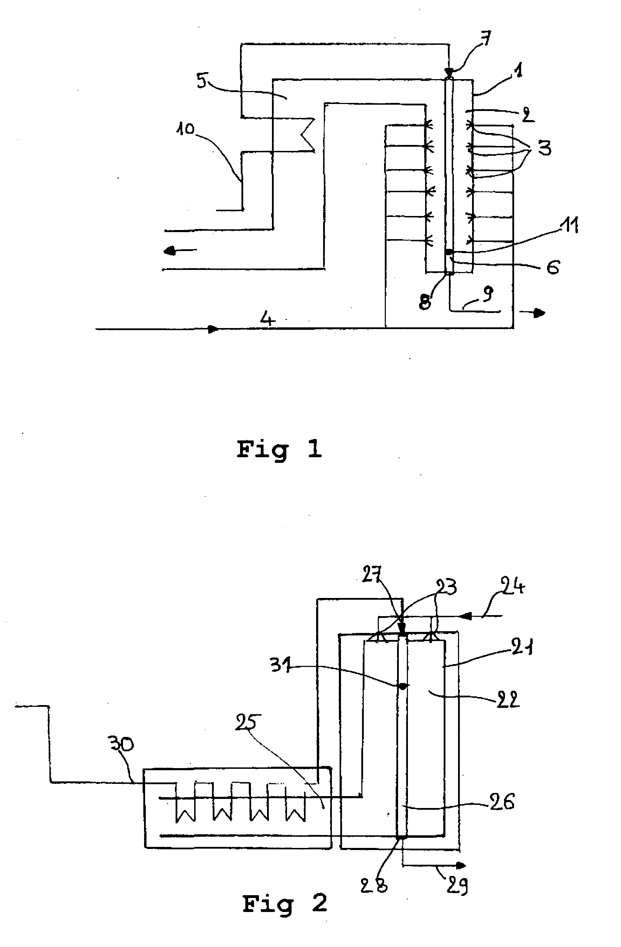

L'invention va maintenant être décrite en se référant aux figures 1 et 2 jointes dans lesquelles :
La figure 1 est une représentation schématique partielle d'un four du type side fired pour le reformage catalytique d'hydrocarbures, apte à la mise en oeuvre du procédé selon l'invention.
La figure 2 est une représentation schématique partielle d'un four du type top fired pour le reformage catalytique d'hydrocarbures, apte à la mise en oeuvre du procédé selon l'invention.

La figure 1 présente un four **1** pour le reformage catalytique d'hydrocarbures, de type « side fired », pouvant permettre la mise en oeuvre du procédé selon l'invention. II comprend une chambre de combustion **2** équipée de brûleurs **3** disposés le long des parois verticales du four et reliés à une alimentation en carburant **4** et une chambre de convection **5** destinée à l'évacuation des gaz et fumées générés par les brûleurs **3.**

Les brûleurs **3** sont disposés de sorte à former des rangées, ils chauffent des tubes T(i) et T(j), représentés par le tube **6.** Remplis de catalyseur, les tubes **6** sont disposés verticalement dans la chambre de combustion **2.** Chaque tube **6** est alimenté à son extrémité supérieure **7** par un mélange réactionnel **10,** il est raccordé à son extrémité inférieure **8** à un collecteur **9** qui collecte les produits de la réaction de reformage catalytique.

Avant d'alimenter le tube **6** le mélange réactionnel **10** circule dans la chambre de convection **5** où il est préchauffé par les gaz et fumées évacués.

Le tube fait partie des tubes T(j), il est équipé d'un thermocouple **11** fixé en dessous de la rangée de brûleurs la plus basse. Le thermocouple est logé dans un boîtier de protection thermique non représenté sur la figure afin de le protéger de la chaleur directe des brûleurs **3.** II est relié à un système externe SCADA qui permet l'acquisition, l'enregistrement et le traitement des données en temps réel (non représenté sur la figure).

La figure 2 présente un four **21** pour le reformage catalytique d'hydrocarbures, de type « top fired », pouvant permettre la mise en oeuvre du procédé selon l'invention. II comprend une chambre de combustion **22** équipée de brûleurs **23** disposés au plafond du four et reliés à une alimentation en carburant **24** et une chambre de convection 25 destinée à l'évacuation des gaz et fumées générés par les brûleurs **23.**

Les brûleurs **23** chauffent des tubes T(i) et T(j), représentés par le tube **26.** Remplis de catalyseur, les tubes **26** sont disposés verticalement dans la chambre de combustion **22.** Chaque tube **26** est alimenté à son extrémité supérieure **27** par un mélange réactionnel **30,** il est raccordé à son extrémité inférieure **28** à un collecteur **29** qui collecte les produits de la réaction de reformage catalytique.

Avant d'alimenter le tube **26** le mélange réactionnel **30** circule dans la chambre de convection **25** où il est préchauffé par les gaz et fumées évacués.

Le tube fait partie des tubes T(j), il est équipé d'un thermocouple **31,** fixé dans le tiers supérieur du tube. Le thermocouple est logé dans un boîtier de protection thermique non représenté sur la figure afin de le protéger de la chaleur directe des brûleurs **23.** II est relié à un système externe SCADA qui permet l'acquisition, l'enregistrement et le traitement des données en temps réel (non représenté sur la figure).

Les fours représentés sur les figures 1 et 2 fonctionnent de la même manière pour la mise en oeuvre de l'invention.

Les tubes T(j) sont choisis librement, mais sont de préférence représentatifs d'un profil de température dans le four, on peut aussi équiper chaque tube de catalyseur d'un thermocouple qui lui est propre.

Les températures θt(j) mesurées par chaque thermocouple **11, 31** équipant un des tubes T(j) sont transmises, au système d'acquisition et d'enregistrement de données SCADA. Elles sont converties en des valeurs de températures maximales pour chaque tube de catalyseur. Les températures maximales sont obtenues à partir de corrections appliquées aux températures mesurées selon l'invention.

Ainsi, les données de températures enregistrées, complétées par les mesures pyrométriques périodiques, fournissent conformément au procédé de l'invention l'ensemble des valeurs de température θmax en fonction du temps pour la totalité des tubes du four. A partir des données de température θmax ainsi enregistrées, on calcule la durée de vie restante des tubes **6, 26.** Le calcul de cette durée de vie restante utilise typiquement une relation du type relation de Larson-Miller, loi connue et couramment utilisée par l'homme du métier pour prévoir la durée de vie des tubes. Un exemple d'étude détaillée de la rupture en température et un exemple de calcul de durée de vie en fonction de la température sont présentés dans l'article « Journal of Corrosion Science and Engineering, Volume 6 Paper H012, », qui est notamment disponible à partir des adresses suivantes : http://www2.umist.ac.uk/corrosion/JCSE/Volume6/Default.html ou http://www.icse.org/

Au temps M, tout tube dispose d'une durée de vie V_{M} maximale restante, qui lui est propre, pour une utilisation à la température normale de fonctionnement. Cette durée de vie V_{M} est le résultat de la prévision de vie calculée à l'aide de la relation de Larson-Miller audit instant M.

Lors du calcul suivant, soit au temps M+1, on va, conformément à l'invention, déterminer à l'aide du paramètre de température de Larson Miller la durée de vie maximale restante V_{M+1}, qui tient compte des conditions effectives de fonctionnement du tube depuis le calcul précédent. Pour cela, à l'aide du paramètre de température de Larson Miller, et à partir des valeurs de θmax en fonction du temps, en fonction de la durée pendant laquelle le tube de catalyseur est resté à la température θmax, en fonction des propriétés thermiques du tube, on calcule pour la période de temps écoulée depuis le dernier calcul à la température θmax (donnée par SCADA), la durée équivalente d'utilisation à la température normale de fonctionnement. La durée de vie restante estimée est alors réajustée en fonction de cette durée équivalente d'utilisation. Le calcul est réalisé pour chaque tube de catalyseur.

Remarque : si des tubes ont fonctionné à une température inférieure à la température normale de fonctionnement, leur durée de vie restante estimée augmenté ; si des tubes ont fonctionné à une température supérieure à la température normale de fonctionnement, leur durée de vie restante estimée diminue.

Le calcul de la durée de vie restante estimée apporte ainsi à l'exploitant de l'installation des éléments complémentaires essentiels afin de prévoir ou non le remplacement de tout ou partie des tubes lors d'un arrêt de maintenance programmé.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

D'autres avantages découlent de la mise en oeuvre du suivi des températures selon l'invention, en particulier lors de phases transitoires telles qu'un redémarrage, un changement de la composition du mélange réactionnel ou toute autre cause. Cet outil permet aux opérateurs du four de réagir immédiatement en cas de surchauffe dans le four ; des mesures immédiates peuvent être prises pour remédier à la surchauffe, l'impact négatif sur la durée de vie des tubes est ainsi moindre.

## Revendications

1. Procédé de maintenance d'un four pour le reformage catalytique à la vapeur d'un mélange réactionnel d'hydrocarbures, le four comprenant des tubes remplis de catalyseur, une première partie des tubes T(j) étant équipés d'un thermocouple fixé sur la paroi dudit tube en un point Yₜ(j), les autres tubes T(i) en étant dépourvus, le procédé comprenant au moins les étapes suivantes :
1) mesurer périodiquement, pour chaque tube une température θp de paroi du tube à l'aide d'un moyen de mesure de température à distance ;
2) mesurer et enregistrer en continu pour chacun des tubes T(j) une deuxième température θt(j) de paroi du tube à l'aide du thermocouple fixé en partie basse desdits tubes et relié à un système d'acquisition de données apte à stocker des données pendant un temps au moins égal à la durée de vie du four, établir une courbe θt(j) en fonction du temps ;
3) pour chaque tube T(j), et pour chaque mesure θp(j), calculer Δ6(j) = θp(j) - θt(j),
4) pour chaque tube T(i), établir une courbe virtuelle θt(i)ᵥᵢᵣₜᵤₑₗ en fonction du temps telle que :
- elle passe par des points θt(i)ᵥᵢᵣₜᵤₑₗ d'ordonnée θp(i) - Δθ(j) pour lesquels Δθ(j) est la valeur calculée lors de l'étape 3) pour un tube T(j) voisin choisi, et
- elle résulte de la translation de la courbe θt(j) pour ledit tube T(j) voisin, passant par ces points ;
5) par ailleurs, pour au moins un tube, déterminer le point du tube le plus chaud et estimer l'écart de température Δθₘₐₓ entre la température θₘₐₓ audit point le plus chaud et la température θt mesurée au même moment dans les conditions de l'étape 2 ;
6) pour chaque tube T(i), établir une courbe θmax(i) en fonction du temps à partir de la courbe virtuelle θt(i)ᵥᵢᵣₜᵤₑₗ établie à l'étape 4 et du Δθₘₐₓ de l'étape 5), et pour chaque tube T(j) établir la courbe θmax(j) à partir de la courbe établie à l'étape 2 et du Δθmax estimé, de sorte à établir un historique de température de chaque tube T(i) ;
7) en déduire, en temps réel, et à l'aide d'une méthode de calcul appropriée une durée de vie restante pour chaque tube T(i), à partir de la courbe θmax(i) et pour chaque tube T(j), à partir de la courbe θmax(j) ;
8) comparer la durée de vie restante pour chacun des tubes avec le temps restant avant les prochains arrêts programmés du four ; et
9) remplacer les tubes le nécessitant lors de chaque arrêt programmé.

2. Procédé selon la revendication 1 **caractérisé en ce que** le moyen de mesure de température à distance est un pyromètre.

3. Procédé selon l'une des revendications 1 ou 2 **caractérisé en ce qu'**on mesure la température à l'aide du moyen de mesure de température à distance au moins une fois par mois pour l'ensemble des tubes.

4. Procédé selon la revendication 3 **caractérisé en ce qu'**on mesure la température à l'aide du moyen de mesure de température à distance plus fréquemment pour les tubes les plus chauds, de préférence quotidiennement.

5. Procédé selon l'une des revendications 1 à 4 **caractérisé en ce qu'**on effectue au moins deux mesures de température à l'aide du moyen de mesure de température à distance en des points différents sur la longueur d'un tube et **en ce que** la mesure θp est la plus grande des valeurs mesurées.

6. Procédé selon l'une des revendications 1 à 5 **caractérisé en ce que** le four de reformage étant du type side fired, pour chaque tube T(j), le thermocouple est fixé en un point du tube situé à une ordonnée Yₜ(j), choisie dans le 1/3 inférieur du tube par rapport au sens de circulation du mélange réactionnel.

7. Procédé selon l'une des revendications 1 à 5 **caractérisé en ce que** le four de reformage étant du type top fired, pour chaque tube T(j), le thermocouple est fixé en un point du tube situé à une ordonnée Yₜ(j), choisie dans le 1/3 supérieur du tube par rapport au sens de circulation du mélange réactionnel.

8. Procédé selon l'une des revendications 1 à 7, **caractérisé en ce que** l'acquisition et l'enregistrement des mesures de température pour la durée de vie du four de reformage sont effectués par l'intermédiaire d'un système de type SCADA.

9. Procédé selon l'une quelconque des revendications 1 à 8, **caractérisé en ce que** la conversion de la relation θmax(i) en fonction du temps en durée de vie restante pour chacun des tubes est réalisée en utilisant la relation de Larson Miller.

## Claims

1. Method for the maintenance of a furnace for the catalytic steam reforming of a hydrocarbon reaction mixture, the furnace comprising tubes filled with catalyst, a first portion of the tubes T(j) being equipped with a thermocouple attached to the wall of said tube at a point Yₜ(j), the other tubes T(i) being free thereof, the method comprising at least the following steps:
1) periodically measuring, for each tube, a temperature θp of the wall of the tube using a remote temperature measurement means;
2) continuously measuring and recording, for each of the tubes T(j), a second temperature θt(j) of the wall of the tube using a thermocouple attached to the lower portion of said tubes and connected to a data acquisition system capable of storing data for a time at least equal to the service life of the furnace, to establish a curve θt(j) as a function of the time;
3) for each tube T(j) and for each measurement θp(j), calculating Δθ(j) = θp(j) - θt(j);
4) for each tube T(i) establishing a virtual curve θt(i)ᵥᵢᵣₜᵤₐₗ as a function of the time such that:
- it passes through the θt(i)ᵥᵢᵣₜᵤₐₗ ordinate points θp(i)ₗ - Δθ(j) for which Δθ(j) is the value calculated during step 3) for a chosen neighboring tube T(j); and
- it results from the translation of the curve θt(j) for said neighboring tube T(j), passing through these points;
5) furthermore, for at least one tube, determining the hottest point of the tube and estimating the temperature difference Δθₘₐₓ between the temperature θₘₐₓ at said hottest point and the temperature θt measured at the same time under the conditions of step 2);
6) for each tube T(i), establishing a curve θmax(i) as a function of the time starting from the virtual curve θt(i)ᵥᵢᵣₜᵤₐₗ established in step 4) and from Δθₘₐₓ from step 5), and for each tube T(j) establishing the curve θₘₐₓ(j) starting from the curve established in step 2) and from the estimated Δθₘₐₓ, so as to establish a temperature' history for each tube T(i);
7) deducing, in real time, and using a suitable computational method, a remaining service life for each tube T(i), from the curve θₘₐₓ(i) and for each tube T(j) from the curve θₘₐₓ(j);
8) comparing the remaining service life for each of the tubes with the time remaining before the next programmed shutdowns of the furnace; and
9) replacing the tubes that need replacing during each programmed shutdown.

2. Method according to Claim 1, **characterized in that** the remote temperature measurement means is a pyrometer.

3. Method according to either of Claims 1 and 2, **characterized in that** the temperature is measured using the remote temperature measurement means at least once a month for all the tubes.

4. Method according to Claim 3, **characterized in that** the temperature is measured using the remote temperature measurement means more frequently for the hottest tubes, preferably daily.

5. Method according to one of Claims 1 to 4, **characterized in that** at least two temperature measurements are carried out using the remote temperature measurement means at different points over the length of a tube and **in that** the measurement θp is the largest of the values measured.

6. Method according to one of Claims 1 to 5, **characterized in that**, when the reforming furnace is of the side-fired type, for each tube T(j), the thermocouple is attached to a point of the tube located at an ordinate Yₜ(j) chosen in the lower 1/3 of the tube relative to the circulation direction of the reaction mixture.

7. Method according to one of Claims 1 to 5, **characterized in that**, when the reforming furnace is of the top-fired type, for each tube T(j), the thermocouple is attached to a point of the tube located at an ordinate Yₜ(j) chosen in the upper 1/3 of the tube relative to the circulation direction of the reaction mixture.

8. Method according to one of Claims 1 to 7, **characterized in that** the acquisition and recording of the temperature measurements for the service life of the reforming furnace are carried out using a SCADA type system.

9. Method according to any one of Claims 1 to 8, **characterized in that** the conversion of the relationship θmax(i) as a function of the remaining service life for each of the tubes is carried out using the Larson-Miller relation.

## Patentansprüche

1. Verfahren zur Wartung eines Ofens zur katalytischen Dampfreformierung eines Reaktionsgemisches von Kohlenwasserstoffen, wobei der Ofen mit Katalysator gefüllte Rohre aufweist, wobei ein erster Teil der Rohre T(j) mit einem Thermoelement ausgestattet ist, das an der Wand des Rohres an einem Punkt Yₜ(j) befestigt ist, wobei die anderen Rohre T(i) nicht mit einem solchen versehen sind, wobei das Verfahren mindestens die folgenden Schritte beinhaltet:
1) periodisches Messen, für jedes Rohr, einer Wandtemperatur θp des Rohres mit Hilfe eines Mittels zur Temperaturfernmessung;
2) kontinuierliches Messen und Aufzeichnen, für jedes der Rohre T(j), einer zweiten Wandtemperatur θt(j) des Rohres mit Hilfe des Thermoelements, das im unteren Teil der Rohre befestigt ist und mit einem Datenerfassungssystem verbunden ist, das in der Lage ist, Daten während einer Zeit zu speichern, die mindestens gleich der Lebensdauer des Ofens ist, Erstellen einer Kurve θt(j) in Abhängigkeit von der Zeit;
3) für jedes Rohr T(j) und für jede Messung θp(j), Berechnen von Δθ(j) = θp(j) - θt(j);
4) für jedes Rohr T(i), Erstellen einer virtuellen Kurve θt(i)ᵥᵢᵣₜᵤₑₗₗ in Abhängigkeit von der Zeit, derart, dass:
- sie durch Punkte θt(1)ᵥᵢᵣₜᵤₑₗₗ mit der Ordinate θp(i)
- Δθ(j) verläuft, für welche Δθ(j) der in Schritt 3) berechnete Wert für ein gewähltes benachbartes Rohr T(j) ist, und
- sie aus der Translation der Kurve θt(j) für das benachbarte Rohr T(j) resultiert, die durch diese Punkte verläuft;
5) außerdem, für mindestens ein Rohr, Bestimmen des wärmsten Punktes des Rohres und Schätzen der Temperaturdifferenz Δθₘₐₓ zwischen der Temperatur θₘₐₓ an dem wärmsten Punkt und der Temperatur θt, die zur gleichen Zeit unter den Bedingungen von Schritt 2 gemessen wird;
6) für jedes Rohr T(i), Erstellen einer Kurve θmax(i) in Abhängigkeit von der Zeit ausgehend von der virtuellen Kurve θt(i)ᵥᵢᵣₜᵤₑₗₗ, die in Schritt 4 erstellt wurde, und von Δθₘₐₓ aus Schritt 5), und für jedes Rohr T(j), Erstellen der Kurve θmax(j) ausgehend von der Kurve, die in Schritt 2 erstellt wurde, und dem geschätzten Δθₘₐₓ, derart, dass eine Temperaturgeschichte jedes Rohres T(i) erstellt wird;
7) Ableiten daraus, in Echtzeit und mit Hilfe eines geeigneten Berechnungsverfahrens, einer Restlebensdauer für jedes Rohr T(i) ausgehend von der Kurve θmax(i) und für jedes Rohr T(j) ausgehend von der Kurve θmax(j);
8) Vergleichen der Restlebensdauer für jedes der Rohre mit der verbleibenden Zeit bis zu den nächsten planmäßigen Abschaltungen des Ofens; und
9) Auswechseln der Rohre, bei denen dies erforderlich ist, bei jeder planmäßigen Abschaltung.

2. Verfahren nach Anspruch 1, **dadurch gekennzeichnet, dass** das Mittel zur Temperaturfernmessung ein Pyrometer ist.

3. Verfahren nach einem der Ansprüche 1 oder 2, **dadurch gekennzeichnet, dass** die Temperatur mit Hilfe des Mittels zur Temperaturfernmessung mindestens einmal pro Monat für sämtliche Rohre gemessen wird.

4. Verfahren nach Anspruch 3, **dadurch gekennzeichnet, dass** die Temperatur mit Hilfe des Mittels zur Temperaturfernmessung für die wärmsten Rohre häufiger gemessen wird, vorzugsweise täglich.

5. Verfahren nach einem der Ansprüche 1 bis 4, **dadurch gekennzeichnet, dass** mit Hilfe des Mittels zur Temperaturfernmessung mindestens zwei Temperaturmessungen an unterschiedlichen Punkten auf der Länge eines Rohres durchgeführt werden und dass der Messwert θp der größte der gemessenen Werte ist.

6. Verfahren nach einem der Ansprüche 1 bis 5, **dadurch gekennzeichnet, dass**, wenn der Reformerofen vom seitenbefeuerten Typ ist, für jedes Rohr T(j) das Thermoelement an einem Punkt des Rohres befestigt ist, der sich bei einer Ordinate Yₜ(j) befindet, die, bezogen auf die Zirkulationsrichtung des Reaktionsgemisches, im unteren Drittel des Rohres gewählt ist.

7. Verfahren nach einem der Ansprüche 1 bis 5, **dadurch gekennzeichnet, dass**, wenn der Reformerofen vom deckenbefeuerten Typ ist, für jedes Rohr T(j) das Thermoelement an einem Punkt des Rohres befestigt ist, der sich bei einer Ordinate Yₜ(j) befindet, die, bezogen auf die Zirkulationsrichtung des Reaktionsgemisches, im oberen Drittel des Rohres gewählt ist.

8. Verfahren nach einem der Ansprüche 1 bis 7, **dadurch gekennzeichnet, dass** die Erfassung und die Aufzeichnung der Temperaturmesswerte für die Lebensdauer des Reformerofens mittels eines Systems vom Typ SCADA durchgeführt werden.

9. Verfahren nach einem der Ansprüche 1 bis 8, **dadurch gekennzeichnet, dass** die Umwandlung der Beziehung θmax(i) in Abhängigkeit von der Zeit in eine Restlebensdauer für jedes der Rohre unter Verwendung der Larson-Miller-Beziehung durchgeführt wird.
